# EUROPEAN PATENT APPLICATION

(11) **EP 4 321 899 A1**
(43) Date of publication of application: **14.02.2024**
(21) Application number: 21935873.6
(22) Date of filing: 15.12.2021
(51) Int. Cl.: G01S 7/497

(54) **OPTICAL ASSEMBLY DETECTION SYSTEM FOR LIDAR AND LIDAR**

(30) Priority: 06.04.2021 CN 202110366067
(71) Applicant: Hesai Technology Co., Ltd., Shanghai 201821 (CN)
(72) Inventor: YU, Qingguo, Shanghai 201821 (CN); SONG, Jiamin, Shanghai 201821 (CN); ZHAO, Xin, Shanghai 201821 (CN); ZOU, Congcong, Shanghai 201821 (CN); XIANG, Shaoqing, Shanghai 201821 (CN)
(74) Representative: Appelt, Christian W.
(86) International application number: PCT/CN2021/138325
(87) International publication number: WO 2022/213657

(57) **Abstract**

An optical assembly detection system for a LiDAR and a LiDAR includes an optical assembly at a transmitting end and an optical assembly at a receiving end, and the optical assembly detection system includes: a detection laser and a detection probe, where the detection laser is configured to emit a detection laser beam, and the detection laser beam passes through the optical assembly at the transmitting end and/or the optical assembly at the receiving end, and exits the LiDAR or is incident to the detection probe; and the detection probe is configured to receive the detection laser beam or an echo of the detection laser beam after being reflected off an object and passing through the optical assembly at the receiving end, and convert it into an electrical detection signal; and a signal processing unit that communicates with the detection probe to receive the electrical detection signal, and is configured to determine an operation state of the optical assembly based on the electrical detection signal.

## Description

### TECHNICAL FIELD

The present disclosure relates to the field of photoelectric detection, and in particular, to an optical assembly detection system for a LiDAR and a LiDAR.

### BACKGROUND

LiDAR is a radar system that can emit laser beams to detect characteristic quantities, such as positions and speeds of objects. LiDAR is an advanced detection techinique that combines laser technology with photoelectric detection technology. LiDAR has many advantages, including high resolution, excellent concealment, strong anti-active disturbance ability, high low-altitude detection performance, small form factors and light weight, and is widely used in various fields, such as autonomous driving, traffic communication, drones, intelligent robots, or resources exploration.

Optics (such as convex lenses, concave lenses, flat mirrors, concave mirrors, convex mirrors, semi-permeable mirrors, or the like), as a core device of LiDAR, can be used to collimate, deflect, reflect, or converge the light emitted by a laser emitter or reflected off the object. Different optical path designs can be used in the optics based on functional requirements of the LiDAR. Each optical device can serve a unique function in the LiDAR. The optical path can be directed correctly only when all optical devices operate normally, by which the LiDAR can maintain high detection performance.

During the use of LiDAR, optical devices can have abnormality, for example, fragmentation or dislocation, due to external vibrations, failure of fixing glue, or other reasons. Any abnormal optical device can cause the optical path to shift, degrading or disabling the original function of optical system, which can further affects the performance of the LiDAR. If the optical system is used in a safety-related system, the abnormality of the optical device can also cause a safety risk. Therefore, it is necessary to detect abnormalities of the optical devices of the LiDAR.

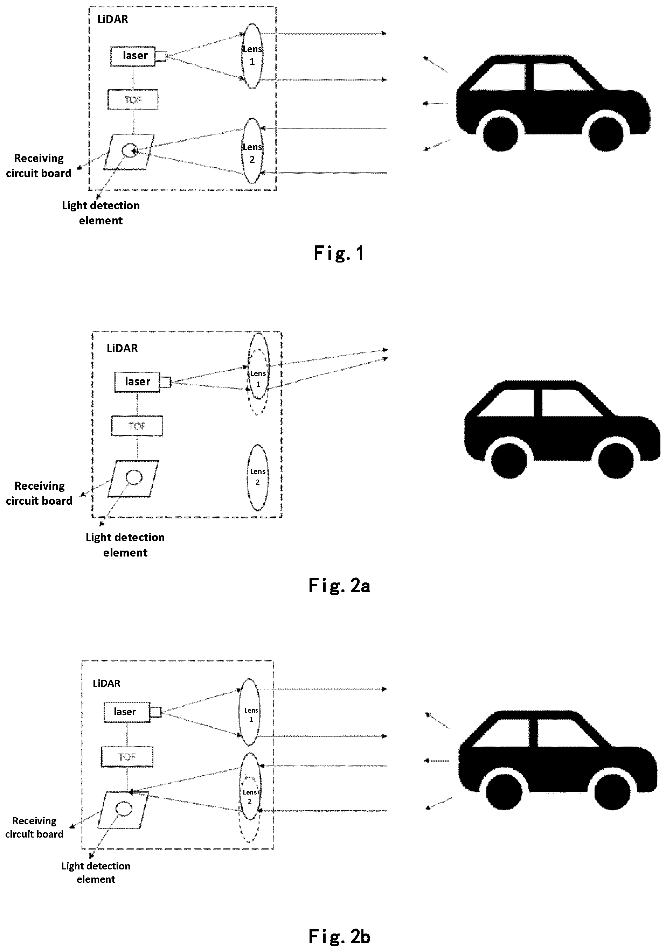

Before shipment of LiDAR from the factory, each optical device can be calibrated and fixed at a predetermined positions based on a designed optical path. FIG. 1illustrates a schematic diagram of a basic LiDAR. In FIG. 1, when a lens (group) 1 and a lens (group) 2 are positioned in their predetermined positions, a light emitted by a laser emitter is collimated by the lens 1 and irradiated onto an object. The object reflects the laser in diffuse reflection, and a part of the reflected light can be concentrated to the light detection element through the lens 2, and the detection is completed after the Time of Flight (TOF) calculation.

When the LiDAR is in use, once any of the above two lenses (groups) is out of position, broken or deformed, it can affect the detection performance of the LiDAR. As shown in FIGs. 2a and 2b, for example, when the lens 1 at the transmitting end is out of position, broken or deformed, the laser emitted by the laser is deflected to other directions through the lens 1 and cannot be irradiated onto the object, and thus the LiDAR can be unable to detect the object. As another example, when the lens 2 at the receiving end is out of position, broken or deformed, the light reflected off the object can be deflected to other directions through the lens 2 and cannot be irradiated onto the light detection element, and thus the LiDAR can be unable to detect the object.

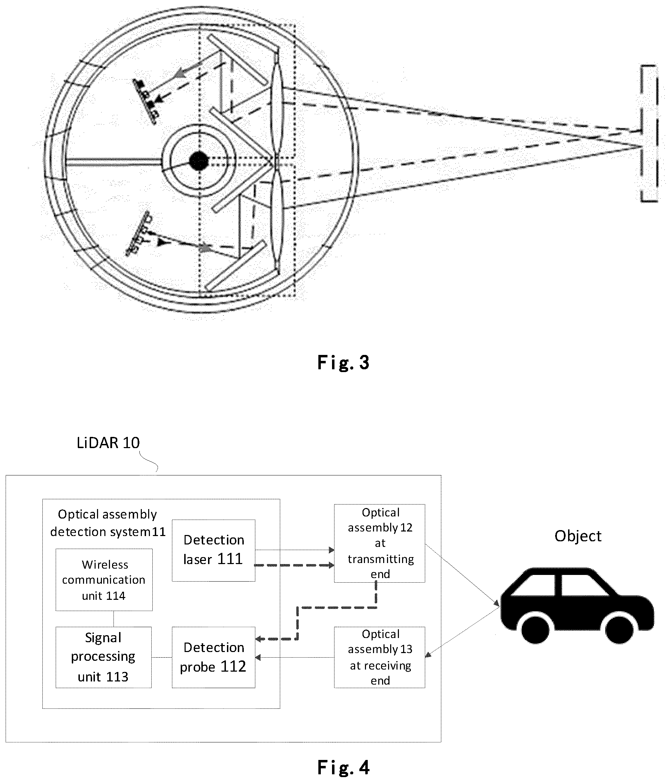

In fact, with the development of LiDAR technology and owing to commercial success, the current optical and mechanical structure of the LiDAR is becoming increasingly complex. In addition to lenses, complicated optical devices such as rotating mirrors, galvanometers, wedge prisms, concave mirrors and the like, and their combinations can be used. FIG. 3 shows a typical LiDAR optical system using a combination of optical devices.

As requirements on the accuracy of the optical system of the LiDAR become higher, the fault tolerance rate of the LiDAR is becoming lower. However, it can be challenging to effectively detect the optical system of the LiDAR after shipment from the factory. In some cases, the optical system can only be found to be abnormal during the maintenance when the LiDAR cannot operate properly.

The content in the background section represents only the technology known to the applicant, and does not necessarily represent the prior art in the field.

### SUMMARY

In view of one or more defects in the prior art, the present disclosure designs an optical assembly detection system, which can detect the operation state of the optical assembly at the transmitting end and/or the optical assembly at the receiving end and in-position status of each optical device in real time during the operation of the LiDAR, so as to improve the efficiency of fault detection of the LiDAR.

The present disclosure provides an optical assembly detection system for a LiDAR, an optical assembly of the LiDAR comprises an optical assembly at a transmitting end and an optical assembly at a receiving end, and the optical assembly detection system comprises:
a detection laser and a detection probe, wherein the detection laser is configured to emit a detection laser beam, and the detection laser beam passes through the optical assembly at the transmitting end and/or the optical assembly at the receiving end, and exits the LiDAR or is incident to the detection probe; and
the detection probe is configured to receive the detection laser beam or an echo of the detection laser beam after being reflected off an object and passing through the optical assembly at the receiving end, and convert it into an electrical detection signal; and
a signal processing unit that communicates with the detection probe to receive the electrical detection signal, and is configured to determine an operation state of the optical assembly based on the electrical detection signal.

According to an aspect of the present disclosure, the detection laser comprises a first detection laser disposed upstream of an optical path of the optical assembly at the transmitting end, the first detection laser being configured to emit a first detection laser beam; the detection probe comprises a first detection probe disposed downstream of an optical path of the optical assembly at the transmitting end, the first detection probe being configured to receive the first detection laser beam and convert it into a first electrical detection signal; and the signal processing unit is configured to determine the operation state of the optical assembly at the transmitting end of the LiDAR based on the first electrical detection signal.

According to an aspect of the present disclosure, the detection laser comprises a second detection laser disposed upstream of an optical path of the optical assembly at the transmitting end, the second detection laser being configured to emit a second detecton laser beam; the detection probe comprises a second detection probe disposed downstream of an optical path of the optical assembly at the receiving end, the second detection probe being configured to receive an echo of the second detection laser beam after being reflected off an object and passing through the optical assembly at the receiving end and convert it into a second electrical detection signal; and the signal processing unit is configured to determine the operation state of the optical assembly of the LiDAR based on the second electrical detection signal.

According to an aspect of the present disclosure, the LiDAR comprises a rotating mirror or a galvanometer, and the detection laser comprises a third detection laser disposed upstream of an optical path of the optical assembly at the transmitting end, the third detection laser being configured to emit a third detection laser beam; the detection probe comprises a third detection probe disposed downstream of an optical path of the optical assembly at the receiving end, the third detection probe being configured to receive the third detection laser beam and convert it into a third electrical detection signal; and the signal processing unit is configured to determine the operation state of the optical assembly of the LiDAR based on the third electrical detection signal.

According to an aspect of the present disclosure, the third detection laser is configured to emit the third detection laser beam when the LiDAR is in a non-ranging state.

According to an aspect of the present disclosure, when a signal intentisity of the electrical detection signal is greater than a preset threshold, it is determined that the optical assembly of the LiDAR is normal.

According to an aspect of the present disclosure, the detection laser is disposed on a laser circuit board of the LiDAR, and the detection probe is disposed on a detector circuit board of the LiDAR or a structural member of the LiDAR.

According to an aspect of the present disclosure, the optical assembly further comprises a fixing member, and the optical assembly at the transmitting end and the optical assembly at the receiving end are fixed to the LiDAR by means of the fixing member.

According to an aspect of the present disclosure, the optical assembly detection system further comprises an in-position detection unit disposed on said fixing member, wherein the in-position detection unit is configured to detect an in-position status of the optical assembly, and the signal processing unit communicates with the in-position detection unit to determine the in-position status of the optical assembly.

According to an aspect of the present disclosure, the optical assembly detection system further comprises a wireless communication unit that is coupled to the signal processing unit and is configured to report the operation state of the optical assembly and/or the in-position status of the optical assembly to a mobile terminal device.

The present disclosure further provides a LiDAR, comprising:
a transmitting unit comprising a laser and an optical assembly at a transmitting end, the laser being configured to emit a ranging laser beam, and the ranging laser beam being emitted to outside of the LiDAR through the optical assembly at the transmitting end;
a receiving unit comprising a detector and an optical assembly at a receiving end, wherein the optical assembly at the receiving end is configured to converge an echo of the ranging laser beam reflected off the object onto the detector, and the detector converts the echo into an electrical signal; and
an optical assembly detection system, comprising:
   a detection laser and a detection probe, wherein the detection laser is configured to emit a detection laser beam, and the detection laser beam passes through the optical assembly at the transmitting end and/or the optical assembly at the receiving end, and exits the LiDAR or is incident to the detection probe; and
   the detection probe is configured to receive the detection laser beam or an echo of the detection laser beam after being reflected off an object and passing through the optical assembly at the receiving end, and convert it into an electrical detection signal; and
   a signal processing unit that communicates with the detection probe to receive the electrical detection signal, and is configured to determine an operation state of the optical assembly at the transmitting end and/or the optical assembly at the receiving end based on the electrical detection signal.

According to an aspect of the present disclosure, the detection laser comprises a first detection laser disposed upstream of an optical path of the optical assembly at the transmitting end, the first detection laser being configured to emit a first detection laser beam; the detection probe comprises a first detection probe disposed downstream of an optical path of the optical assembly at the transmitting end, the first detection probe being configured to receive the first detection laser beam and convert it into a first electrical detection signal; and the signal processing unit is configured to determine the operation state of the optical assembly at the transmitting end of the LiDAR based on the first electrical detection signal.

According to an aspect of the present disclosure, the detection laser comprises a second detection laser disposed upstream of an optical path of the optical assembly at the transmitting end, the second detection laser being configured to emit a second detecton laser beam; the detection probe comprises a second detection probe disposed downstream of an optical path of the optical assembly at the receiving end, the second detection probe being configured to receive an echo of the second detection laser beam after being reflected off an object and passing through the optical assembly at the receiving end and convert it into a second electrical detection signal; and the signal processing unit is configured to determine the operation state of the optical assembly at the transmitting end and/or the optical assembly at the receiving end of the LiDAR based on the second electrical detection signal.

According to an aspect of the present disclosure, the LiDAR comprises a rotating mirror or a galvanometer, and the detection laser comprises a third detection laser disposed upstream of an optical path of the optical assembly at the transmitting end, the third detection laser being configured to emit a third detection laser beam; the detection probe comprises a third detection probe disposed downstream of an optical path of the optical assembly at the receiving end, the third detection probe being configured to receive the third detection laser beam and convert it into a third electrical detection signal; and the signal processing unit is configured to determine the operation state of the optical assembly at the transmitting end and/or the optical assembly at the receiving end of the LiDAR based on the third electrical detection signal.

According to an aspect of the present disclosure, the third detection laser is configured to emit the third detection laser beam when the LiDAR is in a non-ranging state.

According to an aspect of the present disclosure, when a signal intentisity of the electrical detection signal is greater than a preset threshold, it is determined that the optical assembly at the transmitting end and/or the optical assembly at the receiving end of the LiDAR is normal.

According to an aspect of the present disclosure, the detection laser is disposed on a laser circuit board of the LiDAR, and the detection probe is disposed on a detector circuit board of the LiDAR or a structural member of the LiDAR.

According to an aspect of the present disclosure, the optical assembly further comprises a fixing member, and the optical assembly at the transmitting end and the optical assembly at the receiving end are fixed to the LiDAR by means of the fixing member.

According to an aspect of the present disclosure, the optical path detection system comprises an in-position detection unit disposed on said fixing member, wherein the in-position detection unit is configured to detect an in-position status of the optical assembly, and the signal processing unit communicates with the in-position detection unit to determine the in-position status of the optical assembly at the transmitting end and the optical assembly at the receiving end.

According to an aspect of the present disclosure, the LiDAR further comprises wireless communication unit that is coupled to the signal processing unit and is configured to report the operation state of the optical assembly at the transmitting end and the optical assembly at the receiving end and/or the in-position status of the optical assembly to a mobile terminal device.

### BRIEF DESCRIPTION OF THE DRAWINGS

The accompanying drawings constituting a part of the present disclosure are used to provide a further understanding of the present disclosure. The schematic embodiments and descriptions of the present disclosure are used to explain the present disclosure, and do not constitute improper limitations to the present disclosure. In the drawings:
FIG. 1 illustrates a schematic diagram of a LiDAR;
FIG. 2a illustrates a schematic diagram of abnormality of an optical device at a transmitting end;
FIG. 2b illustrates a schematic diagram of abnormality of an optical device at a receiving end;
FIG. 3 illustrates a schematic diagram of a LiDAR with a typical combination of optical devices;
FIG. 4 illustrates a schematic diagram of an optical assembly detection system according to an embodiment of the present disclosure;
FIG. 5 illustrates a schematic diagram illustrating the detection of optical assembly at the transmitting end with a normal optical path according to a first mbodiment of the present disclosure;
FIG. 6 illustrates a schematic diagram illustrating the detection of optical assembly at the transmitting end with an abnormal optical path according to a first embodiment of the present disclosure;
FIG. 7 illustrates a schematic diagram illustrating the detection of optical assembly at the receiving end with a normal optical path according to a second embodiment of the present disclosure;
FIG. 8 illustrates a schematic diagram illustrating the detection of optical assembly at the receiving end with an abnormal optical path according to a second embodiment of the present disclosure;
FIG. 9 illustrates a schematic diagram illustrating the detection of the optical assembly of the rotating mirror LiDAR according to a third embodiment of the present disclosure;
FIG. 10 illustrates a schematic diagram illustrating in-position status detection of the optical assembly according to a fourth embodiment of the present disclosure;
FIG. 11 illustrates a block diagram illustrating in-position status detection of the optical assembly according to a fourth embodiment of the present disclosure;
FIG. 12 illustrates a schematic diagram of a short switch of an in-position detection unit according to an embodiment of the present disclosure;
FIG. 13 illustrates a schematic diagram of a micro switch of an in-position detection unit according to an embodiment of the present disclosure;
FIG. 14 illustrates a block diagram of a LiDAR according to an embodiment of the present disclosure; and
FIG. 15 illustrates a flowchart of an optical assembly detection method according to an embodiment of the present disclosure.

### DETAILED DESCRIPTION

In the following, only some exemplary embodiments are briefly described. The described embodiments can be modified in various different ways without departing from the spirit or scope of the present disclosure, as would be appararent to those skilled in the art. Accordingly, the drawings and descriptions are to be regarded as illustrative and not restrictive in nature.

In the description of the present disclosure, it needs to be understood that the orientation or position relations denoted by such terms as "central" "longitudinal" "latitudinal" "length" "width" "thickness" "above" "below" "front" "rear" "left" "right" "vertical" "horizontal" "top" "bottom" "inside" "outside" "clockwise" "counterclockwise" and the like are based on the orientation or position relations as shown in the accompanying drawings, and are used only for the purpose of facilitating description of the present disclosure and simplification of the description, instead of indicating or suggesting that the denoted devices or elements must be oriented specifically, or configured or operated in a specific orientation. Thus, such terms should not be construed to limit the present disclosure. In addition, such terms as "first" and "second" are only used for the purpose of description, rather than indicating or suggesting relative importance or implicitly indicating the number of the denoted technical features. Accordingly, features defined with "first" and "second" can, expressly or implicitly, include one or more of the features. In the description of the present disclosure, "plurality" means two or more, unless otherwise defined explicitly and specifically.

In the description of the present disclosure, it needs to be noted that, unless otherwise specified and defined explicitly, such terms as "installation" "coupling" and "connection" should be broadly understood as, for example, fixed connection, detachable connection, or integral connection; or mechanical connection, electrical connection or intercommunication; or direct connection, or indirect connection via an intermediary medium; or internal communication between two elements or interaction between two elements. For those skilled in the art, the specific meanings of such terms herein can be construed in light of the specific circumstances.

Herein, unless otherwise specified and defined explicitly, if a first feature is "on" or "beneath" a second feature, it can cover direct contact between the first and second features, or contact via another feature therebetween, other than the direct contact. Furthermore, if a first feature is "on", "above", or "over" a second feature, it can cover the case that the first feature is right above or obliquely above the second feature, or just indicate that the level of the first feature is higher than that of the second feature. If a first feature is "beneath", "below", or "under" a second feature, it can cover the case that the first feature is right below or obliquely below the second feature, or just indicate that the level of the first feature is lower than that of the second feature.

The disclosure below provides many different embodiments or examples so as to realize different structures described herein. In order to simplify the disclosure herein, the following will give the description of the parts and arrangements embodied in specific examples. Of course, they are only for the exemplary purpose, not intended to limit the present disclosure. Besides, the present disclosure can repeat a reference number and/or reference letter in different examples, and such repeat is for the purpose of simplification and clarity, which does not represent any relation among various embodiments and/or arrangements as discussed. In addition, the present disclosure provides examples of various specific processes and materials, but those skilled in the art can also be aware of application of other processes and/or use of other materials.

The present disclosure deescribes an optical assembly detection system for a LiDAR. For example, the optical assembly at the transmitting end and/or the optical assembly at the receiving end can be detected in real time. In another example, the in-position status of the respective optical device in the LiDAR can be monitored in real time, and the detection results are transmitted to the mobile terminal, prompting the user of the operation status of the LiDAR.

The preferred embodiments of the present disclosure will be described below in conjunction with the accompanying drawings. It should be understood that the preferred embodiments described herein are only used to illustrate and explain the present disclosure, and are not intended to limit the present disclosure.

FIG. 4 shows a schematic diagram of an optical assembly detection system according to an embodiment of the present disclosure. A LiDAR 10 includes an optical assembly 12 at a transmitting end, an optical assembly 13 at a receiving end and an optical assembly detection system 11.

The optical assembly 12 at the transmitting end includes optical devices for collimating, deflecting, reflecting, scanning or converging the laser beam, such as one or more of lenses, semi-transmitting and semi-reflective mirrors, reflective mirrors and rotating mirrors, galvanometers, etc.

The optical assembly 13 at the receiving end includes optical devices for collimating, deflecting, reflecting, scanning or converging the laser beam, such as one or more of lenses, semi- ransmitting and semi-reflective mirrors, reflective mirrors and rotating mirrors, galvanometers, etc.

The optical assembly detection system 11 includes a detection laser 111, a detection probe 112 and a signal processing unit 113.

The detection laser 111 is configured to emit a detection laser beam. The detection laser beam can be received by the detection probe 112 after passing through the optical assembly 12 at the transmitting end (as shown by the dotted-line arrow in FIG. 4), or be received by the detection probe 112 after passing through the optical assembly 13 at the receiving end after being reflected off the object (as shown by the solid-line arrow in FIG. 4).

When detecting the optical assembly 12 at the transmitting end, the detection laser 111 can be disposed upstream of the optical path of the optical assembly 12 at the transmitting end, and the detection probe 112 can be disposed downstream of the optical path of the optical assembly 12 at the transmitting end. During detection, the detection laser 111 can emit a detection laser beam, and the detection laser beam can be incident on the detection probe 112 after passing through the optical assembly 12 at the transmitting end. As shown in the optical path represented by the dotted-line arrow in FIG. 4, the detection probe 112 converts the detection laser beam into an electrical detection signal. The signal processing unit 113 communicates with the detection probe 112 and receives the electrical detection signal, and determines the operation state of the optical assembly 12 at the transmitting end based on the electrical detection signal. According to an embodiment of the present disclosure, when the optical assembly 12 at the transmitting end is operating normally, the detection probe 112 can normally receive the detection laser beam and convert it into the electrical detection signal. When the optical assembly 12 at the transmitting end is out of position, broken or deformed, the detection probe 112 cannot receive the detection laser beam, or the intensity of the received detection laser beam is weak, resulting in the electrical detection signal having a small amplitude. Therefore, it can be determined whether the operation state of the optical assembly 12 at the transmitting end is normal based on the electrical detection signal.

When detecting the optical assembly 13 at the receiving end, the detection laser 111 is disposed upstream of the optical path of the optical assembly 12 at the transmitting end, and the detection probe 112 is disposed downstream of the optical path of the optical assembly 13 at the receiving end. During detection, the detection laser 111 emits a detection laser beam. The detection laser beam passes through the optical assembly 12 at the transmitting end and exits the LiDAR 10 to the outside, and the echo reflected off the object is received by the detection probe 112 after passing through the optical assembly 13 at the receiving end, as shown by the optical path illustrated by the solid-line arrow in FIG. 4, the detection probe 112 converts the echo into an electrical detection signal. The signal processing unit 113 communicates with the detection probe 112 and receives the electrical detection signal, and determines the operation states of the optical assembly 12 at the transmitting end and the optical assembly 13 at the receiving end according to the electrical detection signal. When the optical assembly 12 at the transmitting end operates normally, the operation state of the optical assembly 13 at the receiving end can be determined. In some embodiments, the detection result of the optical assembly 13 at the receiving end can be determined based on that the optical assembly 12 at the transmitting end operates normally.

The detection laser 111 can be disposed upstream of the optical path, and the detection probe 112 can be disposed downstream of the optical path, which are rough descriptions of their positions and are only used to illustrate the optical assembly detection process designed in the present disclosure. The specific location of the detection laser 111 and the detection probe 112 are further described in the embodiments.

The terms involved in the first embodiment and the second embodiment are described below. The LiDAR can include a ranging laser and a ranging detector. The ranging laser can emit a ranging laser beam, which can be emitted to the outside of the LiDAR after passing through the optical assembly at the transmitting end for detection of the object. The ranging laser beam can be diffusely reflected by the object. A part of the echo can return to the LiDAR, and then be incident to the ranging detector after passing through the optical assembly 13 at the receiving end, and be received by the ranging detector and converted into an electrical signal, which can be used to calculate the time-of-flight of the ranging laser beam and the distance from the object. In the present disclosure, the optical path at the transmitting end refers to the optical pathway through which the ranging laser beam emitted by the ranging laser passes from the laser to the boundary of the LiDAR. In some embodiments, an originating end of the optical path at the transmitting end can be the laser, and a terminating end can be the boundary of the LiDAR. The boundary of the LiDAR can be a physical boundary that separates the inside and outside of the LiDAR, such as structural parts such as roof, base, or frame of the LiDAR. The optical path at the receiving end refers to an optical pathway that the echo signal passes through from entering into the boundary of LiDAR to reaching the detector. That is, an originating end of the optical path at the receiving end is the boundary of the LiDAR, and a terminating end of the optical path at the receiving end is the detector.

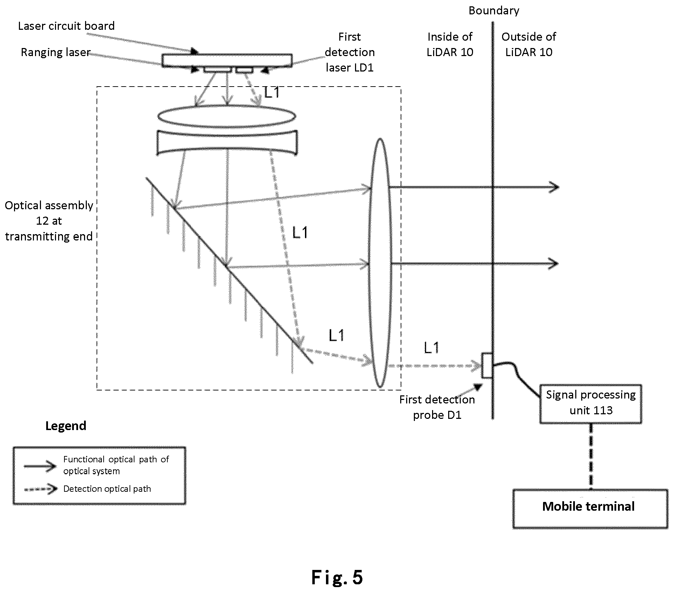

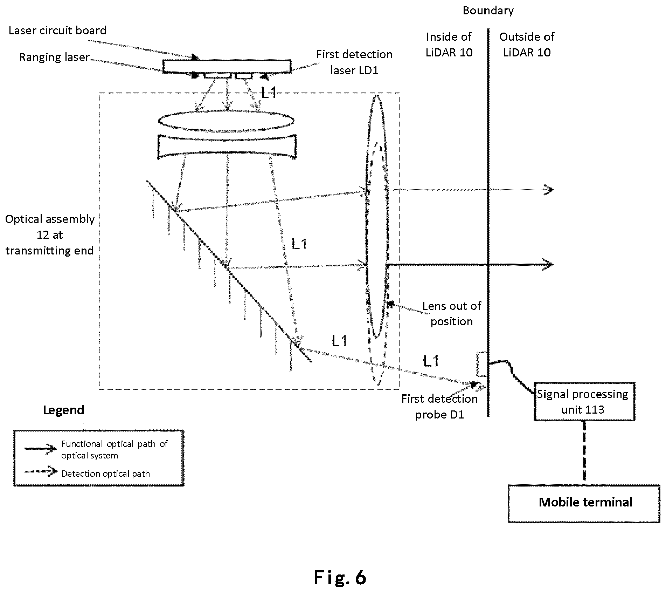

FIG. 5 illustrates a schematic diagram of an optical assembly detection system according to the first embodiment of the present disclosure, which can be used to detect the optical assembly at the transmitting end. The optical assembly at the transmitting end is in a normal operation state. FIG. 6 illustrates a situation where the optical assembly at the transmitting end is in an abnormal operation state.

As shown in FIG. 5, on the laser circuit board, the first detection laser LD1 is disposed next to the ranging laser in such a way that normal operation of the ranging laser is not affected, and the first detection probe D1 is disposed on a component at the end of the optical path at the transmitting end in such a way that ranging is not affected, such as roof, base or frame of the LiDAR. Furthermore, the installation positions of the first detection laser LD1 and the first detection probe D1 are configured such that when the optical assembly 12 at the transmitting end is normal (the "normal" herein can means normal position and normal structure), the detection laser beam L1 emitted by the first detection laser LD1 can be irradiated onto the first detection probe D1 after passing through the optical assembly 12 at the transmitting end.

As shown in FIG. 6, once an optical device in the optical assembly 12 at the transmitting end is abnormal, for example, the lens being out of position (e.g., deviating from the initial position), the detection laser beam L1 emitted by the first detection laser LD1 cannot be irradiated onto the first detection probe D1. In this way, the signal processing unit 113 (for example, implemented by Field-Programmable Gate Array (FPGA)) can acquire the abnormal information.

According to a preferred embodiment of the present disclosure, the first detection probe D1 can be connected to the signal processing unit through wires to transmit the electrical detection signal, or can transmit the electrical detection signal to the signal processing unit via wireless communication.

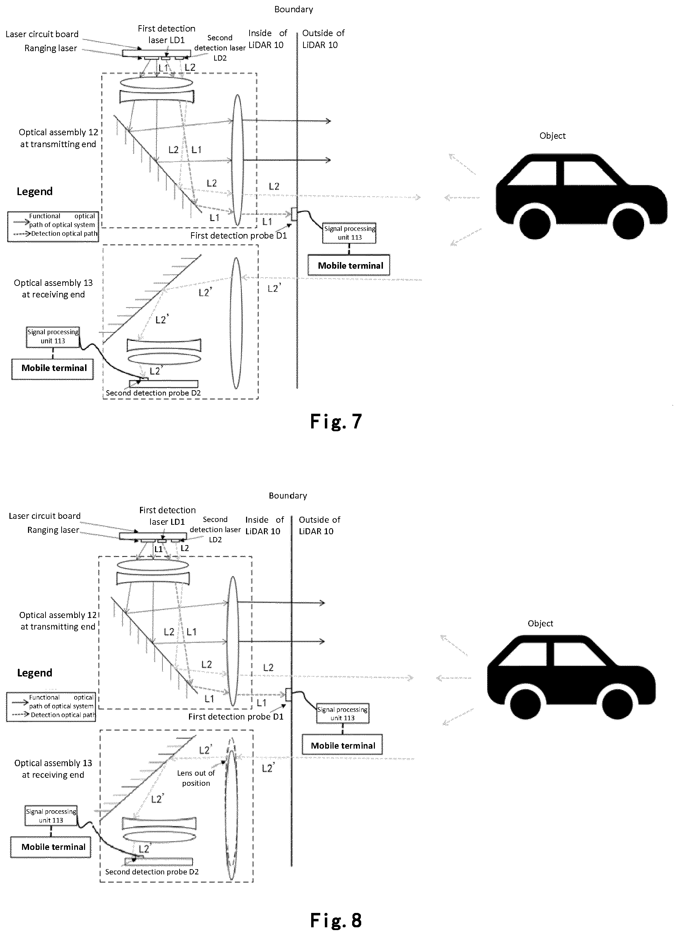

FIG. 7 illustrates a schematic diagram of an optical assembly detection system according to the second embodiment of the present disclosure, which can be used to detect optical assembly at the transmitting end and optical assembly at the receiving end. Both the optical assembly at the transmitting end and the optical assembly at the receiving end are in a normal operation state. FIG. 8 illustrates the situation where the optical assembly at the receiving end are in an abnormal operation state.

As shown in FIG. 7, the second detection laser LD2 is placed next to the ranging laser. Meanwhile, the second detection probe D2 is placed on the components (a detector circuit board or a structural member of the LiDAR 10, for example) at the end of the optical path at the receiving end. Furthermore, the installation positions of the second detection laser LD2 and the second detection probe D2 are configured such that when the optical assembly 12 at the transmitting end and the optical assembly 13 at the receiving end are normal (e.g., having a normal position and a normal structure), the detection laser beam L2 emitted by the second detection laser LD2 passes through the optical assembly 12 at the transmitting end, and the echo L2' reflected off the object passes through the optical assembly 13 at the receiving end and then can be irradiated onto the second detection probe D2.

The premise on which the detection of the optical assembly 13 at the receiving end is based is that the detection of the optical assembly 12 at the transmitting end is normal. When any optical device of the optical assembly at the receiving end is abnormal, as shown in FIG. 8, the detection laser beam L2 emitted by the second detection laser LD2 passes through the optical assembly 12 at the transmitting end, and the echo L2' reflected off the object passes through the optical assembly 13 at the receiving end and cannot be irradiated onto the second detection probe D2. In this way, the signal processing unit can determine the abnormal information.

In the embodiments of FIG. 7 and FIG. 8, in addition to the second detection laser LD2 and the second detection probe D2, the first detection laser LD1 and the first detection probe D1 in the embodiments of FIG. 5 and FIG. 6 are also included. Therefore, it can be used to detect the operation states of the optical assembly at the transmitting end and the optical assembly at the receiving end respectively.

It is understood by those skilled in the art that the first detection probe D1 and the second detection probe D2 can be connected to different signal processing units, or can be connected to the same signal processing unit, both of which fall within the protection scope of the present disclosure. In addition, an embodiment where only the second detection laser LD2 and the second detection probe D2 are included and the first detection laser LD1 and the first detection probe D1 are not included can also be contemplated, all of which are within the protection scope of the present disclosure.

The first and second embodiments can be implemented either independently or in combination. As shown in FIG. 7, the first detection laser LD1 cooperates with the first detection probe D1 to detect the operation state of the optical assembly 12 at the transmitting end, and the second detection laser LD2 cooperates with the second detection probe D2 to detect the operation state of the optical assembly 12 at the transmitting end and the optical assembly 13 at the receiving end. Moreover, when the optical assembly 12 at the transmitting end is normal, the operation state of the optical assembly 13 at the receiving end can be determined.

The optical assemblies in the first and second embodiments are only a combination of lenses and reflectors. In practice, there are many other types of optical devices, such as rotating mirrors or galvanometers.

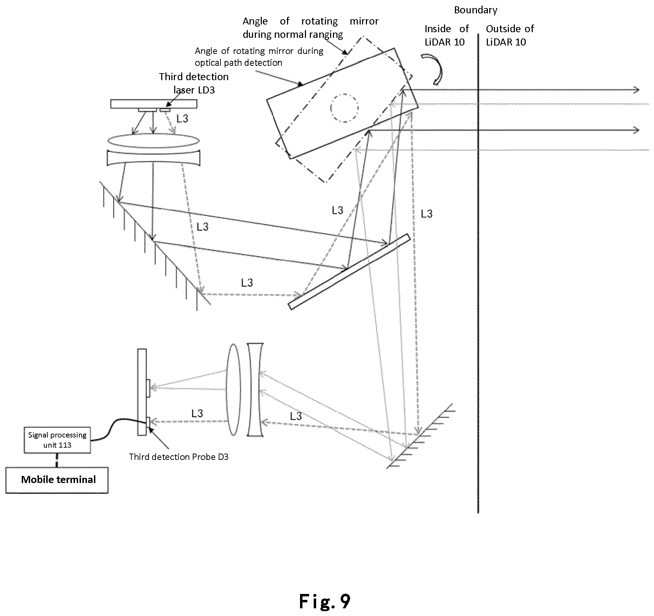

FIG. 9 shows a schematic diagram illustrating the detection of the optical assembly of the rotating mirror LiDAR according to the third embodiment of the present disclosure. The rotating mirror LiDAR includes a ranging laser and a ranging detector. The detection optical path refers to the optical pathway through which the ranging laser beam emitted by the ranging laser passes from the laser to the detector. An originating end of the detection optical path is the laser, and a terminating end is the detector.

Field of View (FOV) of the rotating mirror LiDAR is limited. Only when the rotating mirror turns into the angle range of the detection window, the transmitting unit and receiving unit start to work. When the rotating mirror is at other angles, the transmitting unit and receiving unit do not work. The characteristics of the rotating mirror can be leveraged to complete the detection of the optical assembly inside the LiDAR 10. Specifically, on the laser circuit board, a third detection laser LD3 is additionally placed next to the ranging laser, and meanwhile, a third detection probe D3 is placed on the end of the detection optical path. The installation positions of the third detection laser LD3 and the third detection probe D3 are configured such that when the optical assembly is normal and the rotating mirror is turned to a specific angle (non-ranging angle), the detection laser beam L3 emitted by the third detection laser LD3 can be exactly irradiated onto the third detection probe D3 after passing through the optical assembly. In this way, the detection of the optical assembly can be completed inside the rotating mirror LiDAR. Preferably, the detection can also be carried out during non-ranging time, thereby avoiding the interference of the ranging laser light and improving the detection precision.

According to a preferred embodiment of the present disclosure, the signal processing unit 113 can receive the electrical detection signal from the detection probe 112, and can determine whether the detected optical assembly is in a normal operation state based on one or more parameters of the electrical detection signal. For example, when the signal intentisity of the electrical detection signal is greater than a preset threshold, it is determined that the corresponding optical assembly is in a normal operation state.

The above three embodiments are example solutions for detecting optical assembly. When a certain optical device is out of position, the first detection probe D1/the second detection probe D2/the third detection probe D3 may fail to receive the light emitted by the first detection laser LD1/second detection laser LD2/third detection laser LD3. The signal processing unit 113 can determine that the optical assembly is abnormal, but cannot determine which optical device in the optical assembly is out of position. In view of this issue, the present disclosure also describes an example detection scheme based on the in-position status of the optical device.

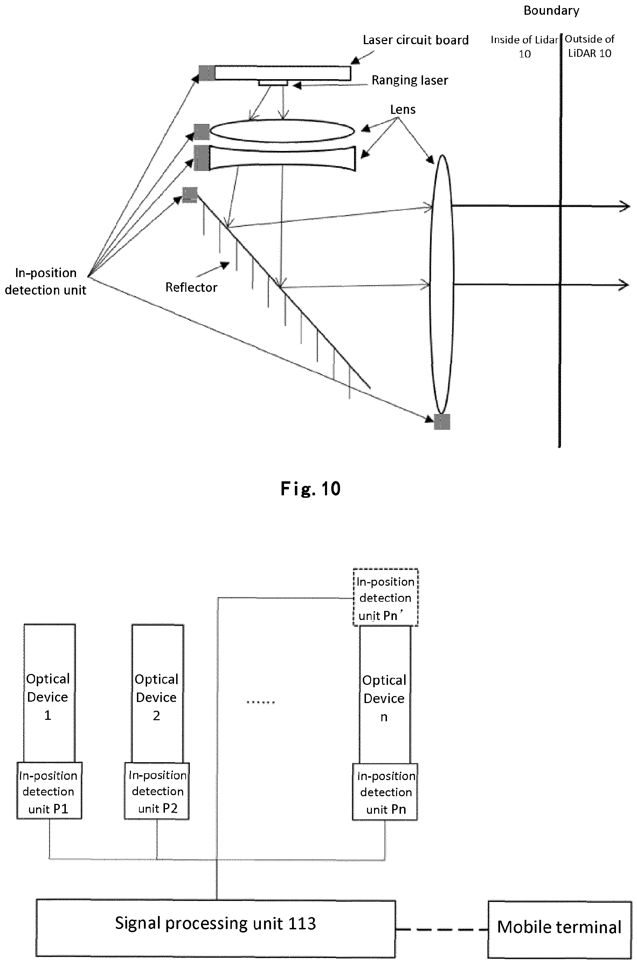

FIG. 10 illustrates a schematic diagram illustrating the in-position status detection of the optical device according to a fourth embodiment of the present disclosure. Each optical device in the optical assembly 12 at the transmitting end can be fixed to the LiDAR by means of a respective fixing member, and each optical device in the optical assembly 13 at the receiving end is also fixed to the LiDAR by means of a respective fixing member. When the optical devices are assembled, at least one in-position detection unit is installed on the fixing member of each optical device, and each in-position signal detection unit communicates with the signal processing unit 113 to determine the in-position status of the respective optical device. When any optical device is displaced, the detection signal of the in-position detection unit is triggered, and the signal processing unit 113 determines the in-position status of each optical device based on the detection signal.

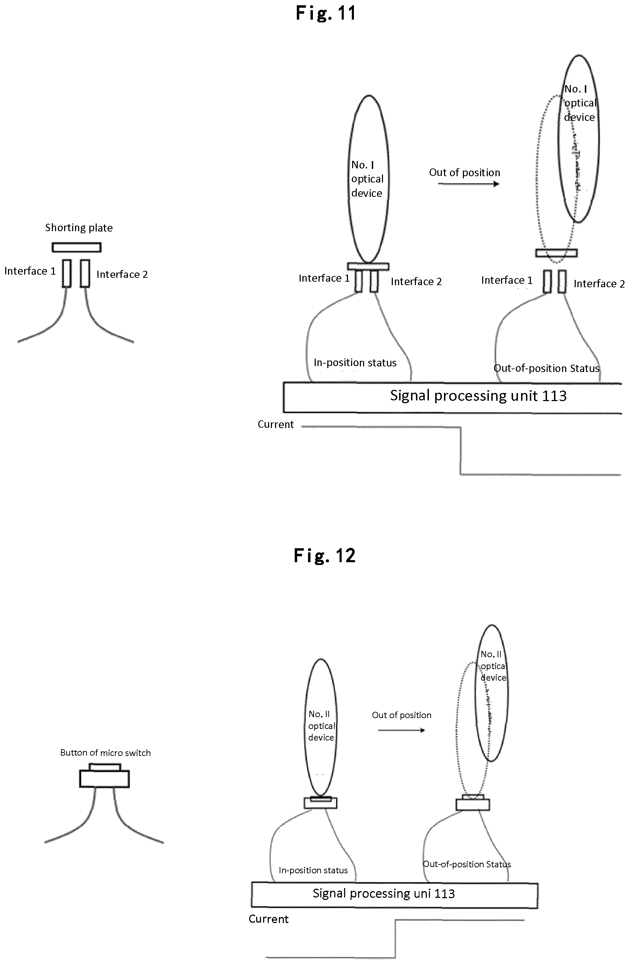

FIG. 11 illustrates a block diagram illustrating the in-position status detection of the optical device according to the fourth embodiment of the present disclosure. The in-position detection unit P1 is installed onto the fixing member of the optical device 1, and the in-position detection unit P2 is installed onto the fixing member of the optical device 2, and so on. It is also possible to install two in-position detection units onto a fixing member of an optical device. For example, an in-position detection unit Pn and an in-position detection unit Pn' are installed at two ends of a fixing member of an optical device n. Multiple in-position detection units can be mounted onto the fixing member of each optical device to provide a redundant configuration.

According to a preferred embodiment of the present disclosure, the in-position detection unit can be, for example, a short switch or a micro switch.

FIG. 12 illustrates a schematic diagram of a short switch of the in-position detection unit according to an embodiment of the present disclosure. Taking the No. I optical device in the figure as an example, when the No. I optical device is in position, the No. I optical device is attached to a shorting plate and presses the shorting plate against the interface 1 and interface 2, and the short switch is in a closed state. There is a continuous microcurrent passing through the switch circuit. Once the No. I optical device is displaced, the No. I optical device is no longer attached to the shorting board, and the shorting board is disengaged from the interface 1 and the interface 2. At this time, the short switch is open, and there is no current flowing through the switch circuit, by which the signal processing unit can identify that the No. I optical device is out of position.

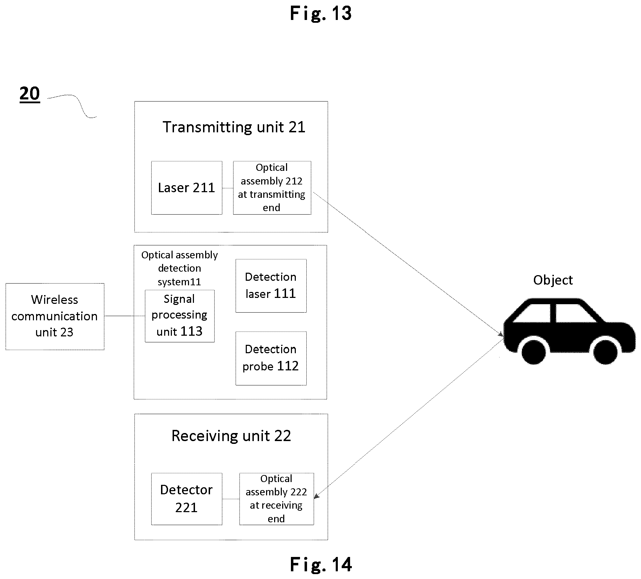

FIG. 13 illustrates a schematic diagram of the micro switch of the in-position detection unit according to an embodiment of the present disclosure. Taking No. II optical device as an example, when the No. II optical device is in position, the No. II optical device is attached to a button of the micro switch and is pressed against the button. At this time, the micro switch is in the off state, and there is no current flowing through the switch circuit. Once the No. II optical device is displaced, the No. II optical device is no longer attached to the button, the button pops up, the micro switch is closed, and a continuous micro current flows through the switch circuit. Therefore, the signal processing unit identifies that the No. II optical device is out of position.

The above four embodiments are not limited to being implemented alone, and can also be implemented in combination, which can detect whether the optical assembly are normal or not, and can also detect whether each optical device is in position.

According to a preferred embodiment of the present disclosure, the LiDAR 10 further includes a wireless communication unit 114, as shown in FIG. 4, which is coupled to the signal processing unit 113 and is configured to report the operation state and/or in-position state of the optical assembly to a mobile terminal to prompt the user. The mobile terminal can include but are not limited to car central control screens, computers, and mobile phones. Preferably, the data transmission mode between the signal processing unit 113 and the mobile terminal is wireless communication.

As shown in FIG. 14, the present disclosure also provides a LiDAR 20, including:
a transmitting unit 21, including a laser 211 and an optical assembly 212 at a transmitting end, the laser 211 is configured to emit a ranging laser beam, and the ranging laser beam is emitted to outside of the LiDAR 20 through the optical assembly 212 at the transmitting end;
a receiving unit 22, including a detector 221 and an optical assembly 222 at a receiving end, wherein the optical assembly 222 at the receiving end is configured to converge an echo of the ranging laser beam reflected off the object onto the detector 221, and the detector 221 converts the echo into an electrical signal; and
an optical assembly detection system 11, including:
a detection laser 111 and a detection probe 112, wherein the detection laser 111 is configured to emit a detection laser beam, and the detection laser beam passes through the optical assembly 212 at the transmitting end and/or the optical assembly 222 at the receiving end, and exits the LiDAR 20 or is incident to the detection probe 112; and
the detection probe 112 is configured to receive the detection laser beam or an echo of the detection laser beam after being reflected off an object and passing through the optical assembly 222 at the receiving end, and convert it into an electrical detection signal; and
a signal processing unit 113 that communicates with the detection probe 112 to receive the electrical detection signal, and is configured to determine an operation state of the optical assembly 212 at the transmitting end and/or the optical assembly 222 at the receiving end based on the electrical detection signal.

According to a preferred embodiment of the present disclosure, the detection laser 111 includes a first detection laser LD1 disposed upstream of an optical path of the optical assembly 212 at the transmitting end, the first detection laser LD1 being configured to emit a first detection laser beam; the detection probe 112 includes a first detection probe D1 disposed downstream of an optical path of the optical assembly 212 at the transmitting end, the first detection probe D1 being configured to receive the first detection laser beam and convert it into a first electrical detection signal; and the signal processing unit is configured to determine the operation state of the optical assembly 212 at the transmitting end of the LiDAR 20 based on the first electrical detection signal.

According to a preferred embodiment of the present disclosure, the detection laser 111 includes a second detection laser LD2 disposed upstream of an optical path of the optical assembly 212 at the transmitting end, the second detection laser LD2 being configured to emit a second detecton laser beam; the detection probe 112 includes a second detection probe D2 disposed downstream of an optical path of the optical assembly at the receiving end, the second detection probe D2 being configured to receive an echo of the second detection laser beam after being reflected off an object and passing through the optical assembly 222 at the receiving end and convert it into a second electrical detection signal; and the signal processing unit 113 is configured to determine the operation state of the optical assembly 212 at the transmitting end and/or the optical assembly 222 at the receiving end of the LiDAR 20 based on the second electrical detection signal.

According to a preferred embodiment of the present disclosure, the LiDAR 20 is a LiDAR including a rotating mirror or a galvanometer, and the detection laser 111 includes a third detection laser LD3 disposed upstream of an optical path of the optical assembly 212 at the transmitting end, the third detection laser LD3 being configured to emit a third detection laser beam; the detection probe 112 includes a third detection probe D3 disposed downstream of an optical path of the optical assembly at the receiving end, the third detection probe D3 being configured to receive the third detection laser beam and convert it into a third electrical detection signal; and the signal processing unit 113 is configured to determine the operation state of the optical assembly 212 at the transmitting end and/or the optical assembly 222 at the receiving end of the LiDAR 20 based on the third electrical detection signal.

According to a preferred embodiment of the present disclosure, the third detection laser LD3 is configured to emit the third detection laser beam when the LiDAR 20 is in a non-ranging state.

According to a preferred embodiment of the present disclosure, when a signal intentisity of the electrical detection signal is greater than a preset threshold, it is determined that the optical assembly 212 at the transmitting end and/or the optical assembly 222 at the receiving end of the LiDAR 20 is normal.

According to a preferred embodiment of the present disclosure, the detection laser 111 is disposed on a laser circuit board of the LiDAR 20, and the detection probe 112 is disposed on a detector circuit board of the LiDAR 20 or a structural member of the LiDAR.

According to a preferred embodiment of the present disclosure, the optical assembly further includes a fixing member, and the optical assembly 212 at the transmitting end and the optical assembly 222 at the receiving end are fixed to the LiDAR by means of the fixing member.

According to a preferred embodiment of the present disclosure, the optical path detection system includes an in-position detection unit disposed on said fixing member, wherein the in-position detection unit is configured to detect an in-position status of the optical assembly, and the signal processing unit 113 communicates with the in-position detection unit to determine the in-position status of the optical assembly 212 at the transmitting end and the optical assembly 222 at the receiving end.

According to a preferred embodiment of the present disclosure, a wireless communication unit 23 is further included. The wireless communication unit 23 is coupled to the signal processing unit 113 and is configured to report the operation state of the optical assembly 212 at the transmitting end and the optical assembly 222 at the receiving end and/or the in-position status of the optical assembly to a mobile terminal device.

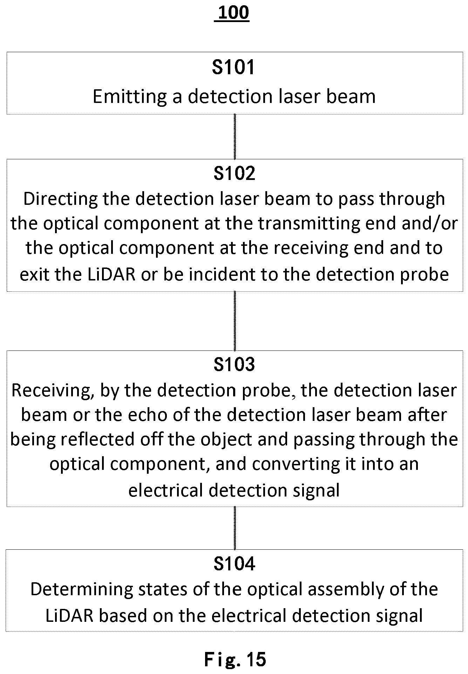

The present disclosure further provides an optical assembly detection method 100 applicable to LiDAR, as shown in FIG. 15, which can be implemented by the optical assembly detection system as described above. The optical assembly of the LiDAR includes an optical assembly at a transmitting end and an optical assembly at a receiving end. The optical assembly detection method can include:
S101: emitting a detection laser beam;
S102: directing the detection laser beam to pass through the optical assembly at the transmitting end and/or the optical assembly at the receiving end and to exit the LiDAR or be incident to the detection probe;
S103: receiving, by the detection probe, the detection laser beam or the echo of the detection laser beam after being reflected off the object and passing through the optical assembly, and converting it into an electrical detection signal; and
S104: determining state of the optical assembly of the LiDAR based on the electrical detection signal.

It should be noted that the foregoing descriptions are only example embodiments of the present disclosure, and are not intended to limit the present disclosure. Although the present disclosure has been described in detail with reference to the foregoing embodiments, the technical solutions recorded in the foregoing embodiments can be modified, or some technical features thereof can be equivalently replaced, as would be obvious to those skilled in the art. Any modifications, equivalent replacements, improvements and/or the like made within the spirit and principles of the present disclosure shall be encompassed within the protection scope of the present disclosure.

## Claims

1. An optical assembly detection system for a LiDAR, an optical assembly of the LiDAR comprises an optical assembly at a transmitting end and an optical assembly at a receiving end, and the optical assembly detection system comprises:
a detection laser and a detection probe, wherein the detection laser is configured to emit a detection laser beam, and the detection laser beam passes through the optical assembly at the transmitting end and/or the optical assembly at the receiving end, and exits the LiDAR or is incident to the detection probe; and
the detection probe is configured to receive the detection laser beam or an echo of the detection laser beam after being reflected off an object and passing through the optical assembly at the receiving end, and convert it into an electrical detection signal; and
a signal processing unit that communicates with the detection probe to receive the electrical detection signal, and is configured to determine an operation state of the optical assembly based on the electrical detection signal.

2. The optical assembly detection system according to claim 1, wherein the detection laser comprises a first detection laser disposed upstream of an optical path of the optical assembly at the transmitting end, the first detection laser being configured to emit a first detection laser beam; the detection probe comprises a first detection probe disposed downstream of an optical path of the optical assembly at the transmitting end, the first detection probe being configured to receive the first detection laser beam and convert it into a first electrical detection signal; and the signal processing unit is configured to determine the operation state of the optical assembly at the transmitting end of the LiDAR based on the first electrical detection signal.

3. The optical assembly detection system according to claim 1 or 2, wherein the detection laser comprises a second detection laser disposed upstream of an optical path of the optical assembly at the transmitting end, the second detection laser being configured to emit a second detecton laser beam; the detection probe comprises a second detection probe disposed downstream of an optical path of the optical assembly at the receiving end, the second detection probe being configured to receive an echo of the second detection laser beam after being reflected off an object and passing through the optical assembly at the receiving end and convert it into a second electrical detection signal; and the signal processing unit is configured to determine the operation state of the optical assembly of the LiDAR based on the second electrical detection signal.

4. The optical assembly detection system according to claim 1 or 2, wherein the LiDAR comprises a rotating mirror or a galvanometer, and the detection laser comprises a third detection laser disposed upstream of an optical path of the optical assembly at the transmitting end, the third detection laser being configured to emit a third detection laser beam; the detection probe comprises a third detection probe disposed downstream of an optical path of the optical assembly at the receiving end, the third detection probe being configured to receive the third detection laser beam and convert it into a third electrical detection signal; and the signal processing unit is configured to determine the operation state of the optical assembly of the LiDAR based on the third electrical detection signal.

5. The optical assembly detection system according to claim 4, wherein the third detection laser is configured to emit the third detection laser beam when the LiDAR is in a non-ranging state.

6. The optical assembly detection system according to claim 1, wherein when a signal intentisity of the electrical detection signal is greater than a preset threshold, it is determined that the optical assembly of the LiDAR is normal.

7. The optical assembly detection system according to claim 6, wherein the detection laser is disposed on a laser circuit board of the LiDAR, and the detection probe is disposed on a detector circuit board of the LiDAR or a structural member of the LiDAR.

8. The optical assembly detection system according to claim 7, wherein the optical assembly further comprises a fixing member, and the optical assembly at the transmitting end and the optical assembly at the receiving end are fixed to the LiDAR by means of the fixing member.

9. The optical assembly detection system according to claim 8, further comprising an in-position detection unit disposed on said fixing member, wherein the in-position detection unit is configured to detect an in-position status of the optical assembly, and the signal processing unit communicates with the in-position detection unit to determine the in-position status of the optical assembly.

10. The optical assembly detection system according to claim 9, further comprising a wireless communication unit that is coupled to the signal processing unit and is configured to report the operation state of the optical assembly and/or the in-position status of the optical assembly to a mobile terminal device.

11. A LiDAR, comprising:
a transmitting unit comprising a laser and an optical assembly at a transmitting end, the laser being configured to emit a ranging laser beam, and the ranging laser beam being emitted to outside of the LiDAR through the optical assembly at the transmitting end;
a receiving unit comprising a detector and an optical assembly at a receiving end, wherein the optical assembly at the receiving end is configured to converge an echo of the ranging laser beam reflected off the object onto the detector, and the detector converts the echo into an electrical signal; and
an optical assembly detection system, comprising:
a detection laser and a detection probe, wherein the detection laser is configured to emit a detection laser beam, and the detection laser beam passes through the optical assembly at the transmitting end and/or the optical assembly at the receiving end, and exits the LiDAR or is incident to the detection probe; and
the detection probe is configured to receive the detection laser beam or an echo of the detection laser beam after being reflected off an object and passing through the optical assembly at the receiving end, and convert it into an electrical detection signal; and
a signal processing unit that communicates with the detection probe to receive the electrical detection signal, and is configured to determine an operation state of the optical assembly at the transmitting end and/or the optical assembly at the receiving end based on the electrical detection signal.

12. The LiDAR according to claim 11, wherein the detection laser comprises a first detection laser disposed upstream of an optical path of the optical assembly at the transmitting end, the first detection laser being configured to emit a first detection laser beam; the detection probe comprises a first detection probe disposed downstream of an optical path of the optical assembly at the transmitting end, the first detection probe being configured to receive the first detection laser beam and convert it into a first electrical detection signal; and the signal processing unit is configured to determine the operation state of the optical assembly at the transmitting end of the LiDAR based on the first electrical detection signal.

13. The LiDAR according to claim 11 or 12, wherein the detection laser comprises a second detection laser disposed upstream of an optical path of the optical assembly at the transmitting end, the second detection laser being configured to emit a second detecton laser beam; the detection probe comprises a second detection probe disposed downstream of an optical path of the optical assembly at the receiving end, the second detection probe being configured to receive an echo of the second detection laser beam after being reflected off an object and passing through the optical assembly at the receiving end and convert it into a second electrical detection signal; and the signal processing unit is configured to determine the operation state of the optical assembly at the transmitting end and/or the optical assembly at the receiving end of the LiDAR based on the second electrical detection signal.

14. The LiDAR according to claim 11 or 12, wherein the LiDAR comprises a rotating mirror or a galvanometer, and the detection laser comprises a third detection laser disposed upstream of an optical path of the optical assembly at the transmitting end, the third detection laser being configured to emit a third detection laser beam; the detection probe comprises a third detection probe disposed downstream of an optical path of the optical assembly at the receiving end, the third detection probe being configured to receive the third detection laser beam and convert it into a third electrical detection signal; and the signal processing unit is configured to determine the operation state of the optical assembly at the transmitting end and/or the optical assembly at the receiving end of the LiDAR based on the third electrical detection signal.

15. The LiDAR according to claim 14, wherein the third detection laser is configured to emit the third detection laser beam when the LiDAR is in a non-ranging state.

16. The LiDAR according to claim 11, wherein when a signal intensity of the electrical detection signal is greater than a preset threshold, it is determined that the optical assembly at the transmitting end and/or the optical assembly at the receiving end of the LiDAR is normal.

17. The LiDAR according to claim 16, wherein the detection laser is disposed on a laser circuit board of the LiDAR, and the detection probe is disposed on a detector circuit board of the LiDAR or a structural member of the LiDAR.

18. The LiDAR according to claim 17, wherein the optical assembly further comprises a fixing member, and the optical assembly at the transmitting end and the optical assembly at the receiving end are fixed to the LiDAR by means of the fixing member.

19. The LiDAR according to claim 18, wherein the optical path detection system comprises an in-position detection unit disposed on said fixing member, wherein the in-position detection unit is configured to detect an in-position status of the optical assembly, and the signal processing unit communicates with the in-position detection unit to determine the in-position status of the optical assembly at the transmitting end and/or the optical assembly at the receiving end.

20. The LiDAR according to claim 19, further comprising wireless communication unit that is coupled to the signal processing unit and is configured to report the operation state of the optical assembly at the transmitting end and/or the optical assembly at the receiving end and the in-position status of the optical assembly to a mobile terminal device.
